# EUROPEAN PATENT APPLICATION

(11) **EP 4 796 806 A1**
(43) Date of publication of application: **26.08.2026**
(21) Application number: 24879414.1
(22) Date of filing: 13.08.2024
(51) Int. Cl.: F16F 9/14, F16F 9/34

(54) **UNIDIRECTIONAL ROTARY DAMPER**

(30) Priority: 20.10.2023 JP 2023181191
(71) Applicant: SOMIC MANAGEMENT HOLDINGS INC., Sumida-ku, Tokyo 130-0004 (JP)
(72) Inventor: SHIMURA, Kazutoshi, Hamamatsu-shi, Shizuoka 431-2103 (JP)
(74) Representative: Ter Meer Steinmeister & Partner
(86) International application number: PCT/JP2024/028927
(87) International publication number: WO 2025/083984

(57) **Abstract**

A member in which a support portion is formed is enabled to be shared between a damper to be installed on a right side of a control target and a damper to be installed on a left side of the control target. The present invention is to provide a unidirectional rotary damper including a valve body (30) including a valve portion (31) having one end as a free end, and a supported portion (32) extending from the other end of the valve portion (31), the valve body (30) being entirely formed of a leaf spring, and a support portion (50) including a top portion (51) directly supporting the supported portion (32), and two faces (52, 53) located on both sides of the top portion (51), in which one face (52) of the two faces (52, 53) is symmetric with respect to the other face (53) of the two faces (52, 53), and when the valve portion (31) is installed on the one face (52) side, the one face (52) serves as a valve seat, and when the valve portion (31) is installed on the other face (53) side, the other face (53) serves as a valve seat.

## Description

### Technical Field

The present invention relates to a unidirectional rotary damper that generates a braking force when a rotor or a housing (hereinafter, referred to as "a rotor or the like") rotates in one direction. Such a damper does not generate a braking force when the rotor or the like rotates in the opposite direction or generates a braking force smaller than that when the rotor or the like rotates in the one direction by controlling the pressure of a viscous fluid using a valve.

### Background Art

For example, Patent Literature 1 discloses a unidirectional rotary damper including a valve body and a support portion. With reference to Fig. 3 of Patent Literature 1, the valve body includes a valve portion having one end as a free end, and a supported portion extending from the other end of the valve portion, and the valve body is entirely formed of a leaf spring. The support portion includes a top portion directly supporting the supported portion of the valve body, and a valve seat located on the right side of the top portion. In this rotary damper, the support portion is formed on a rotor (more specifically, a vane constituting the rotor). In Fig. 3 of Patent Literature 1, the valve portion is located on the right side of the support portion. The valve body is deformed by the pressure of a viscous fluid when the rotor rotates in a clockwise direction, and the valve portion approaches the valve seat. The valve body returns to its original shape when the pressure of the viscous fluid is removed from the valve portion.

Since the braking direction of a unidirectional rotary damper is limited to one direction, the rotation direction of a rotor or the like when the unidirectional rotary damper is installed on the right side of a control target is opposite to that when the unidirectional rotary damper is installed on the left side of the control target. For example, in a unidirectional rotary damper installed on the right side of a driver's seat of an automobile (hereinafter, referred to as a "right damper"), the rotor rotates in a counterclockwise direction as viewed from the seat side in order to decelerate the forward rotation of a seatback. On the other hand, in a unidirectional rotary damper installed on the left side of a passenger seat of an automobile (hereinafter, referred to as a "left damper"), the rotor rotates in a clockwise direction as viewed from the seat side in order to decelerate the forward rotation of a seatback. Therefore, the position of the valve portion with respect to the support portions in the right damper is directly opposite to that in the left damper.

However, in a conventional rotary damper, the valve body cannot be attached in such a manner that the valve portion is located on the left side of the support portion (see Fig. 3 of Patent Literature 1). Therefore, conventionally, dedicated rotors had to be prepared for a right damper and a left damper.

### Citation List

### Patent Literature

Patent Literature 1: JP 4382334 B

### Summary of Invention

### Technical Problem

A problem to be solved by the present invention is to enable a member in which a support portion is formed to be shared between a right damper and a left damper.

### Solution to Problem

In order to solve the above problem, the present invention provides a unidirectional rotary damper including a valve body including a valve portion having one end as a free end, and a supported portion extending from the other end of the valve portion, the valve body being entirely formed of a leaf spring, and a support portion including a top portion directly supporting the supported portion, and two faces located on both sides of the top portion, in which one face of the two faces is symmetric with respect to the other face of the two faces, when the valve portion is installed on a side of the one face, the one face serves as a valve seat, and when the valve portion is installed on a side of the other face, the other face serves as a valve seat.

### Advantageous Effects of Invention

According to the present invention, since a support portion includes a top portion directly supporting a supported portion of a valve body, and two faces located on both sides of the top portion, in which one face of the two faces is symmetric with respect to the other face of the two faces, when the valve portion is installed on the one face side, the one face serves as a valve seat, and when the valve portion is installed on the other face side, the other face serves as a valve seat, it is possible for the support portion to support the valve body even when a position of the valve portion is changed. Therefore, it is possible to enable a member in which a support portion is formed to be shared between a right damper and a left damper.

### Brief Description of Drawings

Fig. 1 is a plan view illustrating an internal structure of a rotary damper according to an embodiment.
Fig. 2 is an enlarged plan view illustrating a partition wall employed in the embodiment.
Fig. 3 is a longitudinal sectional view of the rotary damper according to the embodiment.
Fig. 4 is a longitudinal sectional view illustrating a closed state of a valve body employed in the embodiment.
Fig. 5 is a longitudinal sectional view illustrating a state in which the position of a valve portion of the valve body employed in the embodiment is changed.
Fig. 6 is a longitudinal sectional view illustrating a closed state of the valve body employed in the embodiment.

### Description of Embodiment

Hereinafter, an embodiment of the present invention will be described with reference to the drawings, but the present invention is not limited to the embodiment.

### Embodiment

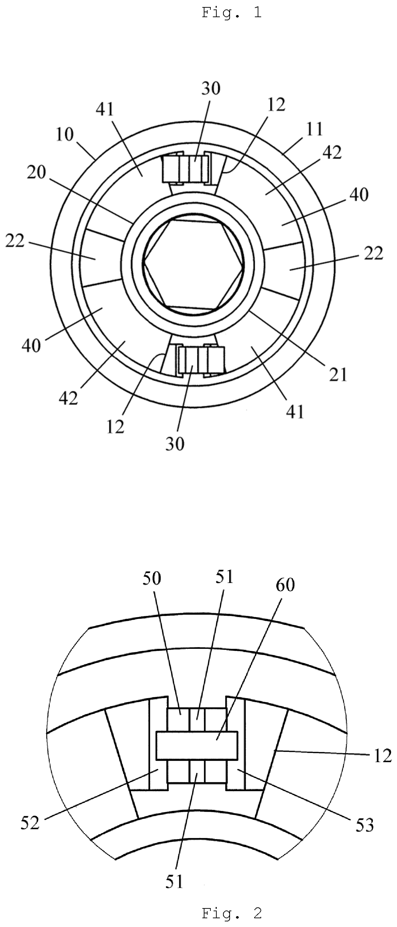

With reference to Fig. 1, a rotary damper according to an embodiment of the present invention includes a housing 10, a rotor 20, and a valve body 30.

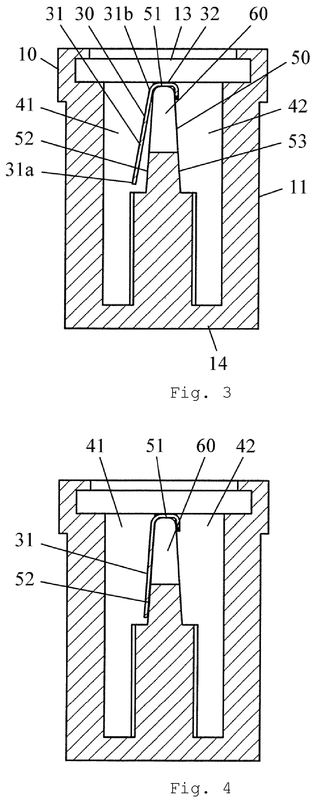

The housing 10 includes a cylindrical peripheral wall 11 and two partition walls 12 protruding from the peripheral wall 11. The partition walls 12 are partitions that separate two fluid chambers 40 formed in the housing 10. With reference to Fig. 2, each partition wall 12 includes a support portion 50 and a flow path 60 passing through the support portion 50. With reference to Fig. 3, the housing 10 further includes an upper wall 13 that closes one end of the peripheral wall 11, and a lower wall 14 that closes the other end of the peripheral wall 11.

The two fluid chambers 40 are spaces into which a liquid viscous fluid, such as oil, is injected. As illustrated in Fig. 1, each of the two fluid chambers 40 is formed around a shaft 21 constituting a rotor 20, and is divided into two chambers of a first chamber 41 and a second chamber 42 by a vane 22 constituting the rotor 20.

With reference to Figs. 2 and 3, the support portion 50 includes a top portion 51, and two faces 52 and 53 located on both sides of the top portion 51. As illustrated in Fig. 2, the top portion 51 is divided into two by the flow path 60. One face of the two faces 52 and 53, that is, the first face 52 located on the left side of the top portion 51 in Fig. 2 is symmetric with respect to the other face of the two faces 52 and 53, that is, the second face 53 located on the right side of the top portion 51 in Fig. 2. The first face 52 and the second face 53 are inclined faces.

As illustrated in Fig. 1, the rotor 20 includes the shaft 21 and the two vanes 22 protruding from the shaft 21. The shaft 21 is coupled to a member that transmits rotational force to the rotor 20. However, depending on the mode of use, the housing 10 can rotate around the rotor 20. In this case, the shaft 21 is coupled to a member that prevents the rotor 20 from rotating. The two vanes 22 are installed in the respective fluid chambers 40, and move in the fluid chambers 40 by rotation of the shaft 21.

As illustrated in Fig. 3, the valve body 30 includes a valve portion 31 having one end 31a as a free end, and a supported portion 32 extending from the other end 31b of the valve portion 31. The entire valve body 30 is a leaf spring.

When the rotor 20 rotates in the braking direction (clockwise direction in Fig. 1), the pressure of the viscous fluid acts on the valve portion 31, and the valve portion 31 is displaced from a position away from the first face 52 to a position in close contact with the first face 52 to close the flow path 60 as illustrated in Fig. 4. As a result, the viscous fluid cannot flow from the first chamber 41 to the second chamber 42 through the flow path 60, and a braking force that decelerates the rotational speed of the rotor 20 is generated.

Here, the first face 52 is a portion that receives the valve portion 31 when the valve portion 31 is in the closed position. That is, the first face 52 functions as a valve seat in a structure in which the valve portion 31 is located on the left side of the top portion 51. In addition, since the entire valve body 30 is a leaf spring, its elasticity may be used to adjust the opening degree of the valve according to changes in the load (the magnitude of the pressure of the viscous fluid acting on the valve portion 31).

When the rotor 20 rotates in the opposite direction (counterclockwise direction in Fig. 1), the valve portion 31 is located away from the first face 52 as illustrated in Fig. 3, and the viscous fluid can flow from the second chamber 42 to the first chamber 41 through the flow path 60. As a result, since the resistance of the viscous fluid to the rotation of the rotor 20 is less than that when the rotor 20 rotates in the braking direction, the rotor 20 can be rotated without decelerating the rotational speed of the rotor 20.

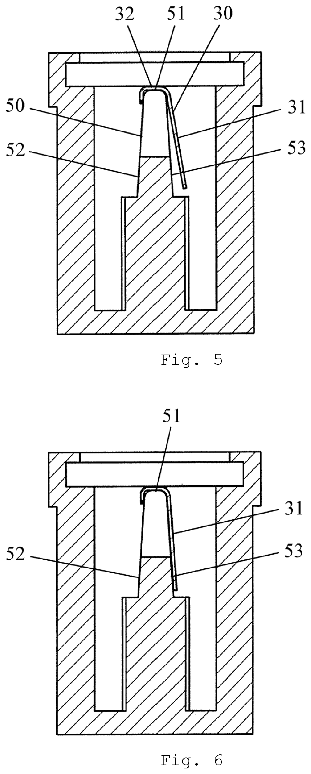

As described above, in the rotary damper according to the embodiment, the support portion 50 has two faces, that is, the first face 52 and the second face 53 located on both sides of the top portion 51 that directly supports the supported portion 32 of the valve body 30, and the first face 52 is symmetric with respect to the second face 53. Therefore, in the rotary damper, the support portion 50 can support the valve body 30 even when the position of the valve portion 31 is changed from the left side of the top portion 51 to the right side of the top portion 51 as illustrated in Fig. 5.

Here, as illustrated in Fig. 6, the second face 53 is a portion that receives the valve portion 31 when the valve portion 31 is in the closed position. That is, the second face 53 functions as a valve seat in a structure in which the valve portion 31 is located on the right side of the top portion 51.

Even in the structure in which the valve portion 31 is located on the right side of the top portion 51, the first face 52 is symmetric with respect to the second face 53, and the operation of the rotary damper is the same as that in the structure in which the valve portion 31 is located on the left side of the top portion 51. Therefore, the support portion 50 of the rotary damper according to the embodiment can support the valve body 30 without impairing the function of the valve body 30 even when the position of the valve portion 31 is changed. Therefore, the member in which the support portion 50 is formed can be shared between the right damper and the left damper.

Note that, since the support portion 50 is formed in the housing 10 in the embodiment, the same housing for the right damper can be used for the left damper. However, when the support portion is formed in the rotor, the rotor can be shared between the right damper and the left damper.

### Reference Signs List

- 10: Housing
- 11: Peripheral wall
- 12: Partition wall
- 13: Upper wall
- 14: Lower wall
- 20: Rotor
- 21: Shaft
- 22: Vane
- 30: Valve body
- 31: Valve portion
- 32: Supported portion
- 40: Fluid chamber
- 41: First chamber
- 42: Second chamber
- 50: Support portion
- 51: Top portion
- 52: First face
- 53: Second face
- 60: Flow path

## Claims

1. A unidirectional rotary damper comprising:
a valve body including a valve portion having one end as a free end, and a supported portion extending from the other end of the valve portion, the valve body being entirely formed of a leaf spring; and
a support portion including a top portion directly supporting the supported portion, and two faces located on both sides of the top portion, wherein
one face of the two faces is symmetric with respect to the other face of the two faces,
when the valve portion is installed on the one face side, the one face serves as a valve seat, and
when the valve portion is installed on the other face side, the other face serves as a valve seat.

2. The unidirectional rotary damper according to claim 1, comprising a housing or a rotor in which the support portion is formed.
